# FASCICULE DE BREVET EUROPEEN

(11) **EP 1 602 139 B1**
(45) Date de publication et mention de la délivrance du brevet: **13.12.2017**
(21) Numéro de dépôt: 04717657.3
(22) Date de dépôt: 05.03.2004
(51) Int. Cl.: H01G 11/24, H01G 11/32, H01G 11/38, H01G 11/48, H01G 11/50, H01G 11/56, H01M 4/139, H01M 4/13, H01M 4/62, H01M 4/131, H01M 4/136, H01M 4/485, H01M 4/505, H01M 4/58, H01M 4/587, H01M 4/525

(54) **PROCEDE D'ELABORATION D'UN MATERIAU COMPOSITE D'ELECTRODE.**
VERFAHREN ZUR HERSTELLUNG EINES VERBUNDWERKSTOFFS FUR ELEKTRODE
METHOD FOR PRODUCING ELECTRODE COMPOSITE MATERIAL

(30) Priorité: 07.03.2003 FR 0302891
(43) Date de publication de la demande: 07.12.2005
(73) Titulaire: Blue Solutions, 29500 Ergué Gabéric (FR); Centre National de la Recherche Scientifique, 75016 Paris (FR)
(72) Inventeur: GUYOMARD, Dominique, F-44880 SAUTRON (FR); GUY, Delphine, F-91670 Angerville (FR); LESTRIEZ, Bernard, F-44000 NANTES (FR); GAUBICHER, Joël, F-44100 NANTES (FR); DESCHAMPS, Marc, F-29000 QUIMPER (FR)
(74) Mandataire: Goulard, Sophie
(86) Numéro de dépôt international: PCT/FR2004/000529
(87) Numéro de publication internationale: WO 2004/082047

(56) Documents cités:
- EP-A- 1 294 040
- WO-A-02/073720
- WO-A-2004/008555
- FR-A- 2 766 970
- US-A- 6 001 507
- US-A1- 2002 076 611
- US-A1- 2002 126 439
- US-A1- 2003 039 886
- CHOI N-S ET AL: "Effect of cathode binder on electrochemical properties of lithium rechargeable polymer batteries" JOURNAL OF POWER SOURCES, ELSEVIER SEQUOIA S.A. LAUSANNE, CH, vol. 112, no. 1, 24 octobre 2002 (2002-10-24), pages 61-66, XP004387631 ISSN: 0378-7753 cité dans la demande
- PATENT ABSTRACTS OF JAPAN vol. 1998, no. 11, 30 septembre 1998 (1998-09-30) & JP 10 172573 A (FURUKAWA ELECTRIC CO LTD:THE), 26 juin 1998 (1998-06-26)
- PATENT ABSTRACTS OF JAPAN vol. 1999, no. 14, 22 décembre 1999 (1999-12-22) & JP 11 265710 A (SANYO ELECTRIC CO LTD), 28 septembre 1999 (1999-09-28)

## Description

La présente invention concerne un procédé pour l'élaboration d'un matériau pour une électrode composite utilisable notamment dans une batterie électrochimique ou dans un supercondensateur, ainsi que le matériau obtenu.

On connaît les électrodes composites constituées par un matériau comprenant la matière active et un polymère ayant une composition massique en oxygène supérieure à 15% comme liant. Le POE en particulier a été utilisé pour les batteries du type lithium métal/polymère sec. Dans les batteries du type lithium ion, ou lithium métal/polymère gélifié, qui contient un électrolyte liquide, des polymères autres que le POE sont utilisés en raison de la solubilité connue de POE dans les électrolytes liquides qui est néfaste pour le maintien de la cohésion mécanique des ensembles électrode et électrode / collecteur de courant lors de l'imprégnation par l'électrolyte liquide.

On connaît en outre, par D. Guyomard, et al, [Solid State Ionics 69 (1994) 222-237], la préparation d'une électrode composite par un procédé consistant à introduire la matière active d'électrode et du noir de carbone dans une solution de PVDF dans la cyclopentanone, à épandre la pâte obtenue sur un feuille métallique pouvant servir de collecteur, à évaporer le solvant cyclopentanone. Au contact d'un électrolyte liquide dans une batterie, l'électrode composite est imprégnée par l'électrolyte, ce qui lui confère une conductivité ionique. L'électrolyte peut être une solution d'un sel de lithium dans un mélange de solvants non volatils, par exemple EC+DEE (carbonate d'éthylène + diéthoxyéthane) ou EC+DMC (carbonate de diméthyle). Le solvant non volatil de l'électrolyte agit comme plastifiant pour le PVDF.

Par ailleurs, N-M. Choi, et al, [J. Power Sources 112 (2002) 61-66] décrivent la préparation d'une électrode composite dans laquelle le liant comprend un polymère PMMA et un polymère PVdF ou PVdF-HFP. Des cathodes contenant comme liant divers mélanges PMMA/PVdF ou PMMA/PVdF-HFP sont immergées, après leur préparation, dans une solution EC/PC LiPF₆ avant d'être montées dans une cellule électrochimique. Le liant du matériau d'électrode composite est alors constitué par le mélange de polymères et un plastifiant liquide.

JP 10 172573 décrit une électrode négative d'une batterie secondaire au lithium, dans laquelle une pâte est appliquée sur un collecteur. La pâte comprend un liant et une poudre de carbone capable d'insérer réversiblement des ions lithium. Le liant est un polymère composite constitué par 55-80% en poids de PVDF et par 20-45% en poids de PMMA. Le matériau composite ne contient pas de solvant non volatil. US 2002/073720 décrit l'utilisation d'un liant polymère comprenant un premier liant halogéné tel que du PVdF et un second liant qui est un polyimide pour l'élaboration d'un matériau composite pour une électrode contenant en outre une matière active d'électrode et éventuellement un matériau conférant une conduction électronique.

Les inventeurs ont maintenant trouvé que le procédé de préparation du matériau constituant une électrode composite était déterminant pour les propriétés dudit matériau, et par conséquent pour les performances de l'électrode lorsqu'elle était utilisée dans un dispositif électrochimique, par exemple dans une batterie, notamment une batterie au lithium.

C'est pourquoi la présente invention a pour objet un procédé pour la préparation d'un matériau pour une électrode composite, le matériau obtenu, ainsi que son utilisation pour une électrode d'une batterie ou d'un supercondensateur selon les revendications 1 à 25. Le procédé selon l'invention pour la préparation d'un matériau composite d'électrode comprend :
- une 1^{ère} étape de préparation d'une solution visqueuse contenant au moins un polymère P1 qui a une composition massique en hétéroatome 0, N, P ou S supérieure ou égale à 15%, au moins un polymère P2 qui a une composition massique en hétéroatome 0, N, P ou S inférieure ou égale à 5%, un matériau conférant une conductivité électronique C1, une matière active d'électrode M1, et au moins un solvant non volatil S1,
- une 2^{ème} étape d'élaboration d'un film à partir de la solution visqueuse obtenue.

Le procédé peut comprendre en outre une étape consistant à ajouter un sel. Le sel peut être introduit dans le matériau soit en ajoutant ledit sel (seul ou en solution dans un solvant volatil) lors de la préparation de la solution visqueuse, soit en imprégnant le film obtenu à partir de la solution visqueuse par une solution dudit sel dans un solvant volatil. Le sel est choisi en fonction de l'utilisation prévue pour le matériau composite. Par exemple, si le matériau composite est destiné à former une électrode pour une batterie au lithium, le sel est choisi parmi les sels de lithium. Lorsque le matériau est destiné à former une électrode pour une supercapacité, le sel est choisi de préférence parmi les sels de cations lourds.

Le procédé peut également comprendre une étape de densification du film par application d'une pression à chaud. La pression est comprise de préférence entre 10 et 1000 bars, et la température 50°C et 140°C. Cette étape peut être effectuée à l'aide d'une calendreuse.

Lors de la préparation de la solution visqueuse, les polymères P1 et P2 sont introduits à l'état pur ou sous forme d'une solution dans un solvant volatil ; C1 est introduit à l'état pur ou sous forme d'une suspension ou d'une solution (suivant sa nature) dans un solvant volatil.

Le polymère P1 a une forte interactivité avec le solvant non volatil S1, le matériau conférant une conductivité électronique C1 et la matière active d'électrode M1. Il peut être choisi parmi les polyéthers, les polyesters, les polymères polyacryliques, les polycarbonates, les polyimines, les polyamides, les polyacrylamides, les polyuréthanes, les polyépoxydes, les polyphosphazènes et les polysulfones. Les polymères P1 dans lesquels l'hétéroatome est 0 ou N sont particulièrement préférés. A titre d'exemple, on peut citer les polyéthers tels que les homopolymères et les copolymères d'oxyde d'éthylène, d'oxyde de méthylène, d'oxyde de propylène, d'épichlorhydrine ou d'allylglycidyléther, les polyesters tels que les homopolymères et les copolymères d'éthylène téréphtalate, de butylène téréphtalate ou d'acétate de vinyle, les polymères polyacryliques tels que les homopolymères et les copolymères d'acrylamide, d'acrylate de méthyle, d'acrylate d'éthyle, d'acrylate de propyle, d'acrylate de butyle, d'acrylate d'éthyle-hexyle, d'acrylate de stéaryle, d'éthylène glycol diacrylate, de triéthylène glycol diméthacrylate, de méthacrylate de méthyle ou d'acide acrylique, les homopolymères et les copolymères d'acrylonitrile, les homopolymères et les copolymères d'acétate de vinyle et d'alcool de vinyle, les polycarbonates tels que les homopolymères et les copolymères de carbonate de bisphénol A, les poly(éthylèneimine). On peut en outre citer les polysulfones telles que les homopolymères et copolymères de vinyle pyrrolidone ou de vinyle sulfone. Par copolymère, on entend dans le présent texte, un composé polymère obtenu à partir d'au moins deux monomères différents. Les poly(oxyde d'éthylène) POE et les poly(méthycrylate de méthyle) PMMA sont particulièrement intéressants.

Le polymère P2 a une faible interactivité avec M1 et C1. A titre d'exemple, on peut citer les homopolymères et les copolymères de chlorure de vinyle, de fluorure de vinylidène, de chlorure de vinylidène, de tétrafluorure d'éthylène, de chlorotrifluoroéthylène, et les copolymères de fluorure de vinylidène et de hexafluoropropylène (PVdF-HFP). On peut également citer les polyoléfines et les élastomères tels que les homopolymères et les copolymères d'éthylène, de propylène, de styrène, de butadiène ou de chloroprène.

Le solvant organique liquide non volatil S1 est constitué par un ou plusieurs composés choisis parmi :
- carbonates linéaires et cycliques. Le solvant S1 est constitué de préférence par un ou plusieurs carbonates choisis parmi le carbonate d'éthylène (EC), le carbonate de propylène (PC), le carbonate de diméthyle, le carbonate de diéthyle et le carbonate de méthyle et d'éthyle.

Le composé C1 peut être constitué par du graphite, des fibres de carbone, des nanofils de carbone, des nanotubes de carbone, ou des polymères conducteurs électroniques. Le noir de carbone, qui ne catalyse pas l'oxydation de l'électrolyte à potentiel élevé, est particulièrement préféré. De nombreux noirs de carbone du commerce répondent à cette condition. On peut citer en particulier les composés Ensagri Super S® ou Super P® commercialisés par la société Chemetals.

Lorsque le matériau composite selon l'invention est destiné à former une électrode positive, la matière active M1 peut être choisie notamment parmi Li₁₊ₓV₃O₈, 0<x<4, LiₓV₂O₅, nH₂O, (0<x<3, 0<n<2), LiFePO₄, les phosphates et sulfates de fer hydratés ou non, les phosphates et les sulfates de vanadyle hydratés ou non [par exemple VOSO₄ et LiₓVOPO₄, nH₂O (0<n<3, 0<x<2)], LiMn₂O₄, LiNiO₂, les composés dérivés de LiMn₂O₄ obtenus par substitution de préférence par Al, Ni et Co, LiMnO₂, les composés dérivés de LiMnO₂ obtenus par substitution de préférence par Al, Ni et Co, LiCoO₂, les composés dérivés de LiCoO₂ obtenus par substitution de préférence par Al, Ti, Mg, Ni et Mn [par exemple LiAlₓNi_{y}Co_{(1-x-y)}O₂, (x<0,5, y<1)].

Lorsque le matériau composite selon l'invention est destiné à former une électrode négative, la matière active M1 peut être choisie notamment parmi :
- les composés carbonés (graphites naturels ou synthétiques, carbones désordonnés, etc.),
- les alliages avec le lithium de type LiₓM (M=Sn, Sb, Si...) (obtenus à partir de SnO, de SnO₂, de composés de Sn, Sn-Fe(-C), de composés du Si, de composés de Sb), ou
- les composés LiₓCu₆Sn₅ (0<x<13), les borates de fer, les pnictures (par exemple Li_{3-x-y}Co_{y}N, Li_{3-x-y}Fe_{y}N, LiₓMnP₄, LiₓFeP₂, LiₓFeSb₂,...), les oxydes simples à décomposition réversible (par exemple CoO, Co₂O₃, Fe₂O₃,...), et les oxydes à insertion tels que les titanates (par exemple TiO₂, Li₄Ti₅O₁₂), MoO₃ ou WO₃.

La préparation de la solution visqueuse peut être effectuée en une seule phase ou en deux phases successives. Lorsqu'elle est effectuée en deux phases successives, un premier mode de réalisation consiste à préparer une solution visqueuse contenant tous les constituants sauf S1, à former un film à partir de cette solution, à sécher le film pour obtenir une poudre, puis à former une nouvelle solution visqueuse en ajoutant S1 à cette poudre, cette nouvelle solution étant utilisée pour la 2^{ème} étape. Un second mode de réalisation consiste à préparer une solution visqueuse contenant tous les constituants sauf P2, à former un film à partir de cette solution, à sécher le film pour obtenir une poudre, à former une nouvelle solution visqueuse en ajoutant à cette poudre une solution de P2 dans un solvant volatil, cette nouvelle solution étant utilisée pour la préparation du film final.

L'introduction de l'un au moins des constituants sous forme d'une solution dans un solvant volatil est avantageuse, du fait qu'elle améliore le contact entre les différents constituants de la solution visqueuse, et qu'elle favorise la précipitation de P2 sous forme cristallisée. Ledit solvant volatil est ensuite éliminé lors du séchage du film dont il ne constitue pas un composant.

Le film peut être obtenu à partir de la solution visqueuse par tout moyen conventionnel, par exemple par extrusion, ou par épandage sur un substrat suivi d'un séchage. Dans ce dernier cas, il est avantageux d'utiliser comme substrat une feuille métallique susceptible de servir de collecteur pour l'électrode, par exemple une feuille ou une grille d'aluminium ou d'acier inoxydable, une feuille ou une grille de cuivre ou de nickel traitée par un revêtement anti-corrosion. Le film sur substrat ainsi obtenu peut être utilisé directement comme électrode.

Le matériau composite selon l'invention est constitué par la matière active d'électrode M1, le matériau conférant une conductivité électronique C1, et un liant organique qui comprend un polymère P1 ayant une composition massique en hétéroatome 0, N, P ou S supérieure ou égale à 15%, un polymère P2 ayant une composition massique en hétéroatome 0, N, P ou S inférieure ou égale à 5%, et un solvant organique liquide non volatil S1. Il est caractérisé en ce que, à l'échelle submicronique et à l'échelle micronique :
- le polymère P1 et le matériau C1 conférant une conductivité électronique forment une phase dense, homogène et continue autour des grains de matière active ;
- le polymère P2 est sous forme d'une phase dispersée qui ne contient pas ou très peu du matériau C1 (généralement moins de 5% en masse) et dont la morphologie qui est du type sphère, cylindre, aiguilles, ou rubans crée une porosité

Le matériau peut contenir en outre un sel.

Les polymères P1 et P2, le matériau C1, le solvant non volatil S1, la matière active d'électrode M1 et le sel sont tels que définis précédemment.

La présence du solvant liquide organique non volatil S1 dans le matériau peut être détectée d'une part par Analyse Thermogravimétrique, et d'autre part par le spectre IR dans lequel les raies spécifiques du solvant sont visibles.

La structure submicronique et micronique du liant peut être constatée sur un échantillon par la microscopie électronique à balayage (MEB) et par la microscopie à force atomique (AFM).

Le matériau selon l'invention est utile pour l'élaboration d'électrodes pour des dispositifs électrochimiques, notamment dans les batteries au lithium ou dans les supercondensateurs. Un autre objet de l'invention est constitué par une électrode composite constituée par le matériau selon l'invention.

Une batterie au lithium comprend un électrode négative constituée par du lithium métallique, un alliage de lithium ou un composé d'insertion du lithium et une électrode positive, les deux électrodes étant séparées par l'électrolyte contenant un sel de lithium. L'électrode positive peut être une électrode composite selon l'invention contenant une matière active d'électrode positive telle que définie ci-dessus. Lorsque l'électrode négative est constituée par un composé d'insertion du lithium, elle peut également être constituée par un matériau selon l'invention dans lequel la matière active est une matière active d'électrode négative telle que définie ci-dessus. Dans les électrodes composites négatives ou positives de la batterie au lithium, le sel du matériau composite est un sel de lithium, de préférence identique au sel de lithium de l'électrolyte, par exemple LiPF₆, LiAsF₆, LiClO₄, LiBF₄, LiC₉BO₈, Li(C₂F₅SO₂)₂N, Li[(C₂F₅)₃PF₃], LiCF₃SO₃, LiCH₃SO₃, et LiN(SO₂CF₃)₂. LiN(SO₂CF₃)₂ est particulièrement préféré.

Un supercondensateur est constitué par deux électrodes à grande surface spécifique séparées par un électrolyte. Les électrodes composites positives et négatives telles que définies ci-dessus peuvent être utilisées dans un supercondensateur. Le sel du matériau composite est choisi de préférence parmi les sels d'un cation lourd. A titre d'exemple, on peut citer les sels de R₃O⁺ (oxonium), NR₄⁺ (ammonium), RC(NHR₂)₂⁺ (amidinium), C(NHR₂)₃⁺ (guanidinium), C₅R₆N⁺ (pyridinium), C₃R₅N₂⁺ (imidazolium), C₃R₇N₂⁺ (imidazolinium), C₂R₄N₃⁺ (triazolium), SR₃⁺ (sulfonium), PR₄⁺ (phosphonium), IR₂⁺ (iodonium), (C₆R₅)₃C⁺ (carbonium), dans lesquels les radicaux R peuvent être identiques ou différents, lesdits radicaux étant choisis de préférence parmi les radicaux alkyles, alkényles, oxaalkyles, oxaalkényles, azaalkyles, azaalkényles, thiaalkyles, thia-alkényles, silaalkyles, silaalkényles, aryles, arylalkyles, alkylaryles, alkénylaryles, dialkylamino et dialkylazo, lesdits radicaux ayant de préférence au plus 5 atomes de carbone. Il est particulièrement avantageux d'utiliser pour l'électrolyte un sel identique à celui qui fait partie du matériau de l'électrode.

La présente invention est illustrée par les exemples suivants, auxquels elle n'est cependant pas limitée. Des électrodes selon l'art antérieur ont également été préparées et leurs performances testées par rapport aux électrodes de l'invention.

### Exemple 1

On a préparé une électrode positive constituée par un matériau composite dont la composition en poids est la suivante :
- 13% de POE ayant une masse molaire de 300 000 g/mol,
- 13% d'un copolymère PVdF-HFP à 12% en masse de HFP,
- 20% d'un mélange EC-PC (50-50 en vol.),
- 43% de LiV₃O₈
- 11% de carbone.

On a préparé une suspension homogène de carbone et de LiV₃O₈ dans l'acrylonitrile, et une solution de EC, PC, POE et PVdF-HFP dans l'acrylonitrile. On a ensuite ajouté la solution à la suspension et on a maintenu le mélange à température ambiante pendant 24 h, pour obtenir une solution visqueuse.

La solution visqueuse a été étalée sur une feuille d'aluminium qui a été laissée à l'air pour permettre l'évaporation de l'acrylonitrile, puis placée à l'étuve à 50°C sous vide pendant 12 heures. L'ensemble ainsi obtenu peut constituer l'électrode positive [désignée ci-après par électrode (a)] d'une batterie.

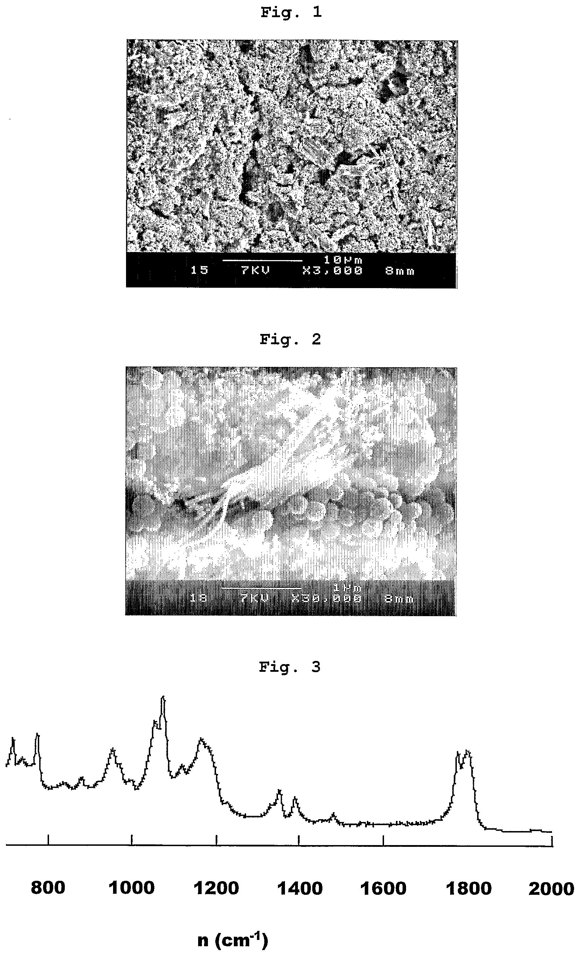

Les figures 1 et 2 représentent des photographies au microscope électronique à balayage (MEB) du matériau composite obtenu, respectivement avec un grossissement de 300 et de 30000. Il apparaît que le procédé selon l'invention permet d'obtenir un matériau dans lequel le polymère P1 (POE) est imprégné de manière homogène par le solvant non volatil qui sert de plastifiant. Les grains de matière active sont enrobés de manière homogène par le mélange de POE et de noir de carbone plastifié par le solvant liquide plastifiant EC+PC, ce qui augmente la conductivité ionique et la conductivité électronique de l'électrode composite. La présence du polymère P2 (PVdF-HFP), qui n'a aucune interaction avec la surface du matériau actif et le noir de carbone, crée une porosité dans le matériau de l'électrode, ce qui favorise l'absorption d'un électrolyte liquide et par conséquent la conductivité ionique.

L'électrode (a) a été montée dans une batterie ayant une anode de lithium et un électrolyte liquide constitué par une solution de LiTFSI dans un mélange EC-PC. Les performances en cyclage ont été mesurées et comparées à celles d'une batterie similaire dans laquelle l'électrode positive est une électrode (b) dont la composition initiale est 54%LiV₃O₈, 14%C, 16%PVdF-HFP et 16% POE, le mélange EC/PC étant introduit a posteriori par imprégnation de l'électrode par l'électrolyte au cours du cyclage selon une technique analogue à celle de l'art antérieur Choi précité. Le cyclage a été effectué entre 3,3 V et 2 V, à des régimes de réduction et d'oxydation de (D/5-C/10).

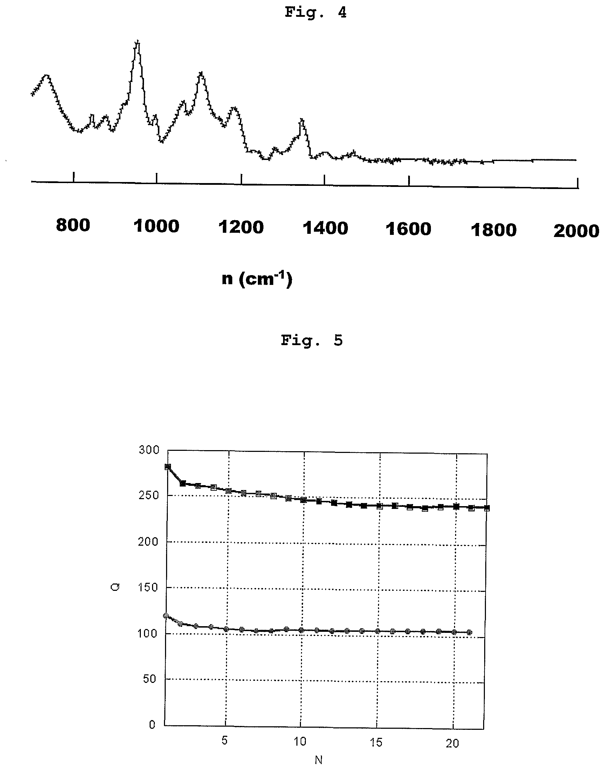

Les spectres infra-rouge (ATR-IR) en fonction du nombre d'onde n (en cm⁻¹) sont repréentés sur la figure 3 pour le matériau composite selon l'invention constituant l'électrode (a) et sur la figure 4 pour matériau composite dont la composition initiale est celle de l'électrode (b). Il apparaît que le matériau obtenu selon l'invention présente une signature ATR-IR différente de celle du matériau obtenu selon l'art antérieur. Cette différence est la présence des pics d'absortion du solvant non-volatil (ici EC-PC à 1775 et 1800 cm⁻¹).

La figure 5 représente l'évolution de la capacité Q (en mAh/g) en fonction du nombre de cycles N. La correspondance entre les deux courbes et les échantillons est la suivante : Courbe -■--■- : échantillon a selon l'invention Courbe -●--●- : échantillon b comparatif

La comparaison des courbes de cyclage montre une amélioration substantielle de la capacité lorsque le solvant EC/PC est introduit lors de la fabrication du matériau composite constituant l'électrode.

### Exemple 2

De la même manière que dans l'exemple 1, on a préparé trois électrodes positives constituées par un matériau dont la composition (en parties en poids) est la suivante :

| Constituant | Echantillon b | Echantillon c | Echantillon d |
|---|---|---|---|
| LiV₃O₈ | 59,5 | 38 | 38 |
| Carbone | 4,9 | 10 | 10 |
| PVdF-HFP | 4,5 | 11 | 11 |
| POE | 0 | 0 | 11 |
| PMMA | 1,1 | 11 | 0 |
| EC/PC 50/50 | 30 | 30 | 30 |

On a préparé une suspension homogène de carbone et de LiV₃O₈ dans l'acrylonitrile, une solution de EC, PC, POE et PVdF-HFP dans l'acrylonitrile (pour l'échantillon d) et une solution de EC, PC, PMMA et PVdF-HFP dans un mélange d'acrylonitrile et de THF (pour les échantillons c et d). Pour chaque essai, on a ensuite ajouté la solution à la suspension et on a maintenu le mélange à température ambiante pendant 24 h, pour obtenir une solution visqueuse.

La solution visqueuse a été étalée sur une feuille d'aluminium qui a été laissée à l'air pour permettre l'évaporation du solvant volatil, puis placée à l'étuve à 50°C sous vide pendant 12 heures.

Chacune des électrodes ainsi obtenues a été montée dans une batterie ayant une anode de lithium et un électrolyte liquide constitué par une solution de LiTFSI dans un mélange EC-PC. Les performances en cyclage ont été mesurées.

A titre de comparaison, on a également préparé une électrode composite selon l'art antérieur Choi, et Al. précité, qui ne contient pas de solvant non volatil plastifiant et qui a la composition initiale (en parties en poids) suivante (échantillon a) :

| LiV₃O₈ | Carbone | PVdF-HFP | PMMA |
|---|---|---|---|
| 85 | 7 | 6,4 | 1,6 |

On a préparé une suspension homogène de carbone et de LiV₃O₈ dans l'acrylonitrile, et une solution de PMMA et PVdF-HFP dans un mélange d'acrylonitrile et de THF. On a ensuite ajouté la solution à la suspension et on a maintenu le mélange à température ambiante pendant 24 h, pour obtenir une solution visqueuse. La solution visqueuse a été étalée sur une feuille d'aluminium qui a été laissée à l'air pour permettre l'évaporation du solvant volatil, puis placée à l'étuve à 50°C sous vide pendant 12 heures. L'ensemble ainsi obtenu a forme une électrode positive qui a été montée dans une batterie analogue à celle qui a été utilisée pour les électrodes selon l'invention, et on a mesuré les performances en cyclage dans des conditions analogues à celles qui ont été utilisées pour les trois électrodes du présent exemple conformes à l'invention.

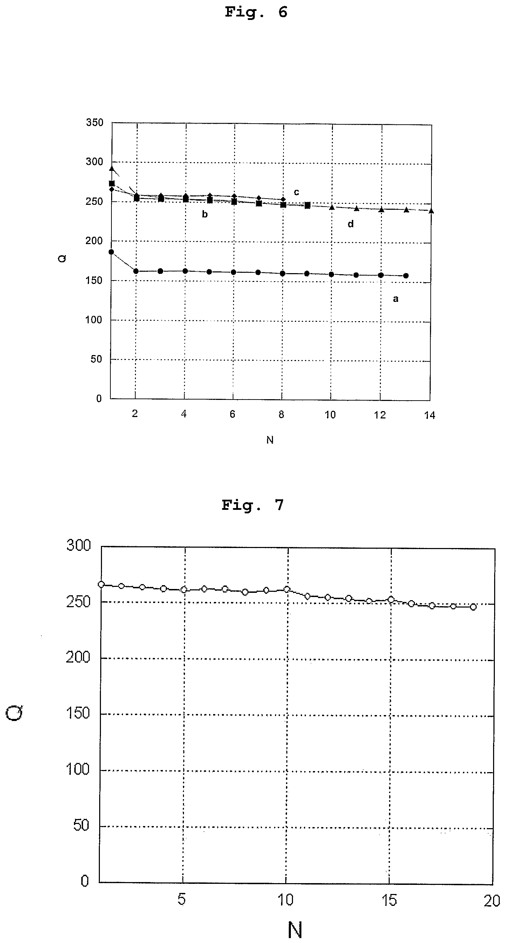

La figure 6 représentent l'évolution de la capacité Q (en mAh/g) en fonction du nombre de cycles N. Le cyclage a été effectué entre 3,3 V et 2 V, à des régimes de réduction et d'oxydation de (D/5-C/10). La correspondance entre les courbes et les échantillons est la suivante :
Courbe -●--●- : échantillon a selon l'art antérieur
Courbe -■--■- : échantillon b selon l'invention
Courbe -◆--◆-: échantillon c selon l'invention
Courbe -▲--▲- : échantillon d selon l'invention.

L'échantillon a correspond à une électrode composite constituée par un matériau contenant uniquement la matière active d'électrode, le carbone, le polymère P2 et le polymère P1 (PMMA). L'échantillon b correspond à une électrode composite constituée par un matériau contenant 70% en poids d'une composition identique à celle de l'échantillon a et 30% en poids d'un solvant plastifiant EC/PC. Comme dans l'exemple 1, la comparaison des courbes de cyclage respectives montre une amélioration substantielle de la capacité lorsque le matériau composite d'électrode contient le solvant non volatil plastifiant dès l'origine.

Les échantillons c et d correspondent à des électrodes constituées par un matériau similaire à celui de l'échantillon b, dans lequel soit le polymère P1 a été remplacé par POE (échantillon c), soit la proportion de polymère P1 a été modifiée. Il apparaît que le changement de polymère P1 ou le changement de proportions de polymère P1 ne modifie pas le bon niveau de performance obtenu par la présence du solvant plastifiant dans le matériau composite dès l'origine.

### Exemple 3

De la même manière que dans l'exemple 1, on a préparé une électrode positive constituée par un matériau dont la composition (en parties en poids) est la suivante :

| Constituant | Echantillon 3 |
|---|---|
| LiV₃O₈ | 40 |
| Carbone | 10,4 |
| PVdF-HFP | 8,8 |
| POE | 8,8 |
| LiTFSI | 2 |
| EC/PC 50/50 | 30 |

On a préparé une suspension homogène de carbone et de LiV₃O₈ dans l'acrylonitrile, et une solution de EC, PC, LiTFSI, POE et PVdF-HFP dans l'acrylonitrile. On a ensuite ajouté la solution à la suspension et on a maintenu le mélange à température ambiante pendant 24 h, pour obtenir une solution visqueuse.

La solution visqueuse a été étalée sur une feuille d'aluminium qui a été laissée à l'air pour permettre l'évaporation du solvant volatil, puis placée à l'étuve à 50°C sous vide pendant 1 heure.

L'électrode ainsi obtenue a été montée dans une batterie ayant une anode de lithium et un électrolyte liquide constitué par une solution de LiTFSI dans un mélange EC-PC. La performance en cyclage a été mesurée.

La figure 7 représente l'évolution de la capacité Q (en mAh/g) en fonction du nombre de cycles N. Le cyclage a été effectué entre 3,7V et 2V à des régimes de réduction et d'oxydation de (D/5-C/10).

La présence de sel et de solvant plastifiant dans le matériau composite dès l'origine assure une capacité élevée de 250 mAh/g stable en cyclage.

### Exemple 4

De la même manière que dans l'exemple 1, on a préparé deux électrodes positives constituées par un matériau dont la composition (en parties en poids) est la suivante :

| Constituant | Echantillon 4a | Echantillon 4b |
|---|---|---|
| VOSO₄ | 71 | 54 |
| Carbone | 18 | 14 |
| PVdF-HFP | 11 | 8 |
| POE | 0 | 8 |
| EC/PC 50/50 | 0 | 16 |

On a préparé une suspension homogène de carbone et de VOSO₄ dans l'acrylonitrile, et une solution de EC, PC, POE et PVdF-HFP dans l'acrylonitrile (pour l'échantillon 4b selon l'invention) ou une solution de PVdF-HFP dans l'acrylonitrile (pour l'échantillon 4a comparatif). On a ensuite ajouté la solution à la suspension et on a maintenu le mélange à température ambiante pendant 24 h, pour obtenir une solution visqueuse.

La solution visqueuse a été étalée sur une feuille d'aluminium qui a été laissée à l'air pour permettre l'évaporation du solvant volatil, puis placée à l'étuve à 50°C sous vide pendant 12 heures.

Chacune des électrodes ainsi obtenues a été montée dans une batterie ayant une anode de lithium et un électrolyte liquide constitué par une solution de LiTFSI dans un mélange EC-PC. Les performances en cyclage ont été mesurées.

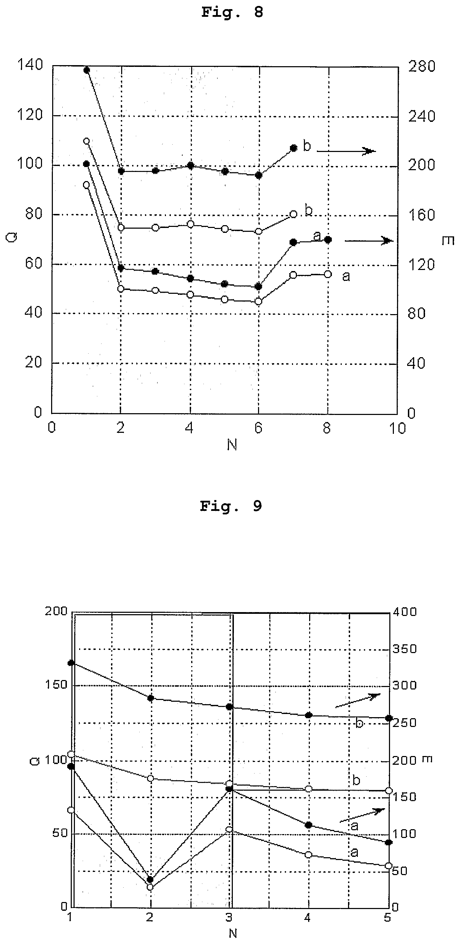

La figure 8 représentent l'évolution de la capacité Q (en mAh/g) (courbes notées -µ--µ-) et l'évolution de l'énergie E (en Wh/kg) (courbes notées -λ--λ-) en fonction du nombre de cycles N. Le cyclage a été effectué entre 3,5 V et 2,0 V à des régimes de réduction et d'oxydation de (D/5-C/10) pour les six premiers cycles, puis de (D/10-C/10) pour les suivants.

L'on constate une augmentation de capacité et d'énergie d'environ 60% et 82% respectivement par suite de l'utilisation d'un matériau contenant des polymères de type P1 et P2, et un solvant non volatil plastifiant introduit dès l'origine.

### Exemple 5

De la même manière que dans l'exemple 1, on a préparé deux électrodes positives constituées par un matériau composite dont la composition (en parties en poids) est la suivante :

| Constituant | Echantillon 5a | Echantillon 5b |
|---|---|---|
| LiFePO₄ | 71 | 54 |
| Carbone | 18 | 14 |
| PVdF-HFP | 11 | 8 |
| POE | 0 | 8 |
| EC/PC 50/50 | 0 | 16 |

On a préparé une suspension homogène de carbone et de LiFePO₄ dans l'acrylonitrile, et une solution de EC, PC, POE et PVdF-HFP dans l'acrylonitrile (pour l'échantillon 5b selon l'invention) ou une solution de PVdF-HFP dans l'acrylonitrile (pour l'échantillon 5a comparatif). On a ensuite ajouté la solution à la suspension et on a maintenu le mélange à température ambiante pendant 24 h, pour obtenir une solution visqueuse.

La solution visqueuse a été étalée sur une feuille d'aluminium qui a été laissée à l'air pour permettre l'évaporation du solvant volatil, puis placée à l'étuve à 50°C sous vide pendant 12 heures.

Chacune des électrodes ainsi obtenues a été montée dans une batterie ayant une anode de lithium et un électrolyte liquide constitué par une solution de LiTFSI dans un mélange EC-PC. Les performances en cyclage ont été mesurées.

La figure 9 représente l'évolution de la capacité Q (en mAh/g) (courbes notées -o--o-) et l'évolution de l'énergie E (en Wh/kg) (courbes notées -●--●-) en fonction du nombre de cycles N. Le cyclage a été effectué entre 3,7 et 2,7 V à des régimes de réduction et d'oxydation de (D/5-C/5) pour a, et de (D/5-C/5) pour les trois premiers cycles puis (D/10-C/10) pour les suivants dans le cas de b.

Comme dans les exemples précédents, l'on constate une augmentation de capacité et d'énergie d'environ 60% et 70% respectivement au premier cycle par suite de l'utilisation d'un matériau contenant un solvant non volatil plastifiant dès l'origine.

## Revendications

1. Procédé de préparation d'un matériau composite d'électrode, qui comprend :
- une 1^{ère} étape de préparation d'une solution visqueuse contenant au moins un polymère P1 qui a une composition massique en hétéroatome 0, N, P ou S supérieure ou égale à 15%, au moins un polymère P2 qui a une composition massique en hétéroatome 0, N, P ou S inférieure ou égale à 5%, un matériau conférant une conductivité électronique C1, une matière active d'électrode M1, et au moins un solvant non volatil S1,
- une 2^{ème} étape d'élaboration d'un film à partir de la solution visqueuse obtenue,
**caractérisé en ce que**, lors de la 1^{ère} étape, les polymères sont introduits à l'état pur ou sous forme d'une solution dans un solvant volatil ; C1 est introduit à l'état pur ou sous forme d'une suspension ou d'une solution dans un solvant volatil ; M1 est introduit à l'état pur ou sous forme d'une suspension dans un solvant volatil ; et **en ce que** :
- P1 est choisi parmi les polyéthers, les polyesters, les polymères polyacryliques, les polycarbonates, les polyimines, les polyamides, les polyacrylamides, les polyuréthanes, les polyépoxydes et les polyphosphazènes, les polysulfones ;
- P2 est choisi parmi les homopolymères et les copolymères de chlorure de vinyle, de fluorure de vinylidène, de chlorure de vinylidène, de tétrafluorure d'éthylène, de chlorotrifluoroéthylène, les copolymères de fluorure de vinylidène et de hexafluoropropylène ; les polyoléfines et les élastomères ;
- le solvant organique liquide non volatil S1 est constitué par un ou plusieurs composés choisis parmi les carbonates linéaires et cycliques ;
- C1 est constitué par du graphite, des fibres de carbone, des nanofils de carbone, des nanotubes de carbone, ou des polymères conducteurs électroniques.

2. Procédé selon la revendication 1, **caractérisé en ce qu'**il comprend l'introduction d'un sel dans le matériau.

3. Procédé selon la revendication 2, **caractérisé en ce que** le sel est introduit dans le matériau en ajoutant ledit sel seul ou en solution dans un solvant volatil lors de la préparation de la solution visqueuse.

4. Procédé selon la revendication 2, **caractérisé en ce que** le sel est introduit en imprégnant le film obtenu à partir de la solution visqueuse, par une solution dudit sel dans un solvant volatil.

5. Procédé selon la revendication 1, **caractérisé en ce qu'**il comprend en outre une étape de densification consistant à soumettre le film à une pression à chaud.

6. Procédé selon la revendication 1, **caractérisé en ce que** le polymère P1 est un polyéther choisi parmi les homopolymères et les copolymères d'oxyde 'éthylène, d'oxyde de méthylène, d'oxyde de propylène, d'épichlorhydrine ou d'allylglycidyléther, ou un polyester choisi parmi les homopolymères et les copolymères d'éthy-lène téréphtalate, de butylène téréphtalate ou d'acétate de vinyle.

7. Procédé selon la revendication 1, **caractérisé en ce que** le polymère P1 est un polymère polyacrylique choisi parmi les homopolymères et les copolymères d'acrylamide, d'acrylate de méthyle, d'acrylate d'éthyle, d'acrylate de propyle, d'acrylate de butyle, d'acrylate d'éthyle-hexyle, d'acrylate de stéaryle, d'éthylène glycol diacrylate, de triéthylène glycol diméthacrylate, de méthacrylate de méthyle ou d'acide acrylique.

8. Procédé selon la revendication 1, **caractérisé en ce que** le polymère P1 est choisi parmi les homopolymères et les copolymères d'acrylonitrile, les homopolymères et les copolymères d'acétate de vinyle et d'alcool de vinyle, les homopolymères et les copolymères de carbonate de bisphénol A, les poly(éthylèneimine), les homopolymères et copolymères de vinyle pyrrolidone ou de vinyle sulfone.

9. Procédé selon l'une des revendications précédentes, **caractérisé en ce que** le solvant volatil est choisi parmi l'acrylonitrile, l'acétonitrile, la cyclohexanone et le THF.

10. Procédé selon la revendication 1, **caractérisé en ce que** la préparation de la solution visqueuse est effectuée en une seule phase.

11. Procédé selon la revendication 1, **caractérisé en ce que** la préparation de la solution visqueuse comprend deux phases successives, la première phase consistant à préparer une solution visqueuse contenant tous les constituants sauf S1, à former un film à partir de cette solution, et à sécher le film pour obtenir une poudre, la deuxième phase consistant à former une nouvelle solution visqueuse en ajoutant S1 à cette poudre, cette nouvelle solution étant utilisée pour l'élaboration du film final.

12. Procédé selon la revendication 1, caractérisé en que la préparation de la solution visqueuse comprend deux phases successives, la première phase consistant à préparer une solution visqueuse contenant tous les constituants sauf P2, à former un film à partir de cette solution, à sécher le film pour obtenir une poudre, la seconde phase consistant à former une nouvelle solution visqueuse en ajoutant à ladite poudre une solution de P2 dans un solvant volatil, cette nouvelle solution étant utilisée pour l'élaboration du film final.

13. Procédé selon la revendication 1, **caractérisé en ce que**, au cours de la 2^{ème} étape, le film est obtenu à partir de la solution visqueuse préparée lors de la 1^{ère} étape, par extrusion ou par épandage sur un substrat suivi d'un séchage.

14. Procédé selon la revendication 13, **caractérisé en ce que** le substrat utilisé pour l'épandage est une feuille ou une grille métallique susceptible de servir de collecteur pour l'électrode.

15. Procédé selon la revendication 1, **caractérisé en ce que** la matière active d'électrode M1 est choisie parmi Li₁₊ₓV₃O₈, 0<x<4, LiₓV₂O₅, nH₂O, (0<x<3, 0<n<2), LiFePO₄, les phosphates et sulfates de fer hydratés ou non, les phosphates et les sulfates de vanadyle hydratés ou non, LiMn₂O₄, les composés dérivés de LiMn₂O₄ obtenus par substitution de Mn par Al, Ni ou Co, LiMnO₂, LiNiO₂, les composés dérivés de LiMnO₂ obtenus par substitution de Mn par Al, Ni ou Co, LiCoO₂, les composés dérivés de LiCoO₂ obtenus par substitution de Co par Al, Ti, Mg, Ni et Mn.

16. Procédé selon la revendication 1, **caractérisé en ce que** la matière active d'électrode M1 est choisie parmi :
- les composés carbonés,
- les alliages avec le lithium de type LiₓM (M=Sn, Sb, Si) obtenus à partir de SnO, de SnO₂, de composés de Sn, Sn-Fe(-C), de composés du Si, de composés de Sb, ou
- les composés LiₓCu₆Sn₅ (0<x<13), les borates de fer, les pnictures (choisis parmi Li_{3-x-y}Co_{y}N, Li_{3-x-y}Fe_{y}N, LiₓMnP₄, LiₓFeP₂, LiₓFeSb₂), les oxydes simples à décomposition réversible et les oxydes à insertion tels que les titanates MoO₃ ou WO₃.

17. Matériau obtenu par un procédé selon la revendication 1, constitué par au moins un polymère P1 qui a une composition massique en hétéroatome 0, N, P ou S supérieure ou égale à 15%, au moins un polymère P2 qui a une composition massique en hétéroatome 0, N, P ou S inférieure ou égale à 5%, un matériau conférant une conductivité électronique C1, une matière active d'électrode M1 et au moins un solvant non volatil S1, **caractérisé en ce que**, à l'échelle submicronique et à l'échelle micronique :
- le polymère P1 et le matériau C1 conférant une conductivité électronique forment une phase dense, homogène et continue autour des grains de matière active ;
- le polymère P2 est sous forme d'une phase dispersée qui ne contient pas ou très peu du matériau C1 et dont la morphologie qui est du type sphère, cylindre, aiguilles, ou rubans crée une porosité.

18. Matériau selon la revendication 17, **caractérisé en ce qu'**il contient un sel.

19. Electrode composite, **caractérisée en ce qu'**elle est constituée par un film d'un matériau composite selon la revendication 17, déposé sur un collecteur.

20. Electrode composite, **caractérisée en ce qu'**elle est constituée par un film d'un matériau composite selon la revendication 18, déposé sur un collecteur.

21. Electrode composite selon la revendication 20, **caractérisée en ce que** le sel du matériau composite est un sel de lithium choisi parmi LiPF₆, LiAsF₆, LiC₄BO₈, LiClO₄, LiBF₄, Li(C₂F₅SO₂)₂N, LiCF₃SO₃, LiCH₃SO₃, Li[(C₂F₅)₃PF₃] et LiN (SO₂CF₃)₂.

22. Electrode composite selon la revendication 20, **caractérisée en ce que** le sel du matériau composite est un sel d'un cation choisi parmi les cations R₃O⁺ (oxonium), NR₄⁺ (ammonium), RC(NHR₂)₂⁺ (amidinium), C(NHR₂)₃⁺ (guanidinium), C₅R₆N⁺ (pyridinium), C₃R₅N₂⁺ (imidazolium), C₃R₇N₂⁺ (imidazolinium), C₂R₄N₃⁺ (triazolium), SR₃⁺ (sulfonium), PR₄⁺ (phosphonium), IR₂⁺ (iodonium), (C₆R₅)₃C⁺ (carbonium), dans lesquels les radicaux R peuvent être identiques ou différents, lesdits radicaux étant choisi parmi les radicaux alkyles, alkényles, oxaalkyles, oxaalkényles, azaalkyles, azaalkényles, thiaalkyles, thiaalkényles, silaalkyles, silaalkényles, aryles, arylalkyles, alkylaryles, alkénylaryles, dialkylamino et dialkylazo.

23. Electrode composite selon la revendication 22, **caractérisée en ce que** les radicaux R ont de préférence au plus 5 atomes de carbone.

24. Batterie constituée par une électrode positive et une électrode négative séparée par un électrolyte qui comprend un sel de lithium, **caractérisée en ce que** l'une au moins de ses électrodes est une électrode selon l'une des revendications 19 ou 21.

25. Supercondensateur constitué par deux électrodes séparées par un électrolyte, **caractérisé en ce que** l'une au moins des électrodes est une électrode selon l'une des revendications 19 ou 22.

## Patentansprüche

1. Verfahren zur Herstellung eines Verbundmaterials für Elektrode, das umfasst:
- einen ersten Herstellungsschritt einer viskosen Lösung, die mindestens ein Polymer P1, das eine Massenzusammensetzung an Heteroatom O, N, P oder S von über oder gleich 15 % hat, mindestens ein Polymer P2, das eine Massenzusammensetzung an Heteroatom O, N, P oder S von unter oder gleich 5 % hat, ein Material, das eine elektronische Leitfähigkeit C1 verleiht, ein aktives Elektrodenmaterial M1 und mindestens ein nicht flüchtiges Lösungsmittel S1 enthält,
- einen zweiten Ausbildungsschritt eines Films aus der erhaltenen viskosen Lösung,
**dadurch gekennzeichnet, dass** beim ersten Schritt die Polymere in reinem Zustand oder in Form einer Lösung in ein flüchtiges Lösungsmittel integriert werden; C1 in reinem Zustand oder in Form einer Suspension oder einer Lösung in ein flüchtiges Lösungsmittel integriert wird; M1 in reinem Zustand oder in Form einer Suspension in ein flüchtiges Lösungsmittel integriert wird; und dass:
- P1 aus den Polyethern, den Polyestern, den Polyacrylpolymeren, den Polycarbonaten, den Polyiminen, den Polyamiden, den Polyacrylamiden, den Polyurethanen, den Polyepoxyden und den Polyphosphazenen, den Polysulfonen ausgewählt ist,
- P2 aus den Homopolymeren und den Copolymeren von Vinylchlorid, von Vinylidenfluorid, von Vinylidenchlorid, von Ethylentetrafluorid, von Chlortrifluorethylen, den Copolymeren von Vinylidenfluorid und von Hexafluorpropylen; den Polyolefinen und den Elastomeren ausgewählt ist,
- das flüssige nicht flüchtige organische Lösungsmittel S1 von einer oder mehreren Verbindungen gebildet ist, die aus den linearen und cyclischen Carbonaten ausgewählt sind,
- C1 von Graphit, Karbonfasern, Karbon-Nanofäden, Karbon-Nanoröhrchen oder elektronisch leitenden Polymeren gebildet ist.

2. Verfahren nach Anspruch 1, **dadurch gekennzeichnet, dass** es das Integrieren eines Salzes in das Material umfasst.

3. Verfahren nach Anspruch 2, **dadurch gekennzeichnet, dass** das Salz in das Material durch Hinzufügen des Salzes allein oder in Lösung in einem flüchtigen Lösungsmittel bei der Herstellung der viskosen Lösung integriert wird.

4. Verfahren nach Anspruch 2, **dadurch gekennzeichnet, dass** das Salz durch Imprägnieren des aus der viskosen Lösung erhaltenen Films mit einer Lösung des Salzes in einem flüchtigen Lösungsmittel integriert wird.

5. Verfahren nach Anspruch 1, **dadurch gekennzeichnet, dass** es ferner einen Verdichtungsschritt umfasst, der darin besteht, den Film einem Druck bei Wärme zu unterziehen.

6. Verfahren nach Anspruch 1, **dadurch gekennzeichnet, dass** das Polymer P1 ein Polyether ist, der aus den Homopolymeren und den Copolymeren von Ethylenoxid, von Methylenoxid, von Propylenoxid, von Epichlorhydrin oder von Allylglycidylether ausgewählt ist oder ein Polyester, das aus den Homopolymeren und den Copolymeren von Terephtalatethylen, von Terephtalatbutylen oder von Vinylacetat ausgewählt ist.

7. Verfahren nach Anspruch 6, **dadurch gekennzeichnet, dass** das Polymer P1 ein Polyacrylpolymer ist, das aus den Homopolymeren und den Copolymeren von Acrylamid, von Methylacrylat, von Ethylacrylat, von Propylacrylat, von Butylacrylat, von Ethylhexylacrylat, von Stearylacrylat, von Ethylenglycoldiacrylat, von Triethylenglycoldimethacrylat, von Methylmethacrylat oder von Acrylsäure ausgewählt ist.

8. Verfahren nach Anspruch 1, **dadurch gekennzeichnet, dass** das Polymer P1 aus den Homopolymeren und den Copolymeren von Acrylnitril, den Homopolymeren und den Copolymeren von Vinylacetat und Vinylalkohol, den Homopolymeren und den Copolymeren von Bisphenolcarbonat A, den Poly(ethyleniminen), den Homopolymeren und Copolymeren von Vinylpyrrolidon oder von Vinylsulfon ausgewählt ist.

9. Verfahren nach einem der vorangehenden Ansprüche, **dadurch gekennzeichnet, dass** das flüchtige Lösungsmittel aus dem Acrylnitril, dem Acetonitril, dem Cyclohexanon und dem THF ausgewählt ist.

10. Verfahren nach Anspruch 1, **dadurch gekennzeichnet, dass** die Herstellung der viskosen Lösung in einer einzigen Phase durchgeführt wird.

11. Verfahren nach Anspruch 1, **dadurch gekennzeichnet, dass** die Herstellung der viskosen Lösung zwei aufeinanderfolgende Phasen umfasst, wobei die erste Phase darin besteht, eine viskose Lösung herzustellen, die alle Bestandteile außer S1 enthält, einen Film mit dieser Lösung zu bilden und den Film zu trocknen, um ein Pulver zu erhalten, wobei die zweite Phase darin besteht, eine neue viskose Lösung durch Hinzufügen von S1 zu diesem Pulver zu bilden, wobei diese neue Lösung für die Ausbildung des endgültigen Films verwendet wird.

12. Verfahren nach Anspruch 1, **dadurch gekennzeichnet, dass** die Herstellung der viskosen Lösung zwei aufeinanderfolgende Phasen umfasst, wobei die erste Phase darin besteht, eine viskose Lösung herzustellen, die alle Bestandteile außer P2 enthält, einen Film mit dieser Lösung zu bilden, den Film zu trocknen, um ein Pulver zu erhalten, wobei die zweite Phase darin besteht, eine neue viskose Lösung durch Hinzufügen zu diesem Pulver einer Lösung von P2 in ein flüchtiges Lösungsmittel zu bilden, wobei diese neue Lösung für die Ausbildung des endgültigen Films verwendet wird.

13. Verfahren nach Anspruch 1, **dadurch gekennzeichnet, dass** im zweiten Schritt der Film aus der viskosen Lösung, die im ersten Schritt hergestellt wurde, durch Extrusion oder durch Ausbreiten auf ein Substrat, gefolgt von Trocknen, erhalten wird.

14. Verfahren nach Anspruch 13, **dadurch gekennzeichnet, dass** das für das Ausbreiten verwendete Substrat eine Folie oder ein Metallgitter ist, das imstande ist, als Kollektor für die Elektrode zu dienen.

15. Verfahren nach Anspruch 1, **dadurch gekennzeichnet, dass** das aktive Elektrodenmaterial M1 aus Li₁₊ₓV₃O₈, 0<x<4, LiₓV₂O₅,nH₂0, (0<x<3, 0<n<2), LiFePO₄, den wässrigen oder nicht wässrigen Eisenphosphaten und -sulfaten, den wässrigen oder nicht wässrigen Vanadylphosphaten und -sulfaten, LiMn₂O₄, den abgeleiteten Verbindungen von LiMn₂O₄, erhalten durch Substitution von Mn durch Al, Ni oder Co, LiMnO₂, LiNiO₂, den abgeleiteten Verbindungen von LiMnO₂, erhalten durch Substitution von Mn durch Al, Ni oder Co, LiCoO₂, den abgeleiteten Verbindungen von LiCoO₂, erhalten durch Substitution von Co durch Al, Ti, Mg, Ni und Mn, ausgewählt ist.

16. Verfahren nach Anspruch 1, **dadurch gekennzeichnet, dass** das aktive Elektrodenmaterial M1 ausgewählt ist aus:
- den kohlenstoffhaltigen Verbindungen,
- den Legierungen mit dem Lithium vom Typ LiₓM (M=Sn, Sb, Si), erhalten aus SnO, SnO₂, Sn-Verbindungen, Sn-Fe(-C), Si-Verbindungen, Sb-Verbindungen, oder
- den Verbindungen LiₓCu₆Sn₅ (0<x<13), den Eisenboraten, den Pniktiden (ausgewählt aus Li_{3-x-y}Co_{y}N, Li_{3-x-y}Fe_{y}N, LiₓMnP₄, LiₓFeP₂, LiₓFeSb₂), den einfachen Oxiden mit reversibler Umsetzung und den Insertionsoxiden wie den Titanaten MoO₃ oder WO₃.

17. Material, erhalten durch ein Verfahren nach Anspruch 1, gebildet von mindestens einem Polymer P1, das eine Massenzusammensetzung an Heteroatom O, N, P oder S von über oder gleich 15 % hat, mindestens einem Polymer P2, das eine Massenzusammensetzung an Heteroatom O, N, P oder S von unter oder gleich 5 % hat, einem Material, das eine elektronische Leitfähigkeit C1 verleiht, einem aktiven Elektrodenmaterial M1 und mindestens einem nicht flüchtigen Lösungsmittel S1, **dadurch gekennzeichnet, dass** auf Submikron- und Mikronstufe:
- das Polymer P1 und das Material C1, das eine elektronische Leitfähigkeit verleiht, eine dichte, homogene und kontinuierliche Phase um Körner aktiven Materials bilden;
- das Polymer P2 in Form einer dispergierten Phase vorliegt, die kein oder sehr wenig Material C1 enthält und dessen Morphologie, die vom Typ Sphäre, Zylinder, Nadeln oder Bänder ist, eine Porosität bildet.

18. Material nach Anspruch 17, **dadurch gekennzeichnet, dass** es ein Salz enthält.

19. Verbundelektrode, **dadurch gekennzeichnet, dass** sie von einem Film eines Verbundmaterials nach Anspruch 17, aufgebracht auf einen Kollektor, gebildet ist.

20. Verbundelektrode, **dadurch gekennzeichnet, dass** sie von einem Film eines Verbundmaterials nach Anspruch 18, aufgebracht auf einen Kollektor, gebildet ist.

21. Verbundelektrode nach Anspruch 20, **dadurch gekennzeichnet, dass** das Salz des Verbundmaterials ein Lithiumsalz ist, ausgewählt aus LiPF₆, LiAsF₆, LiC₄BO₈, LiClO₄, LiBF₄, Li(C₂F₅SO₂)₂N, LiCF₃SO₃, LiCH₃SO₃, Li[(C₂F₅)₃PF₃] und LiN(SO₂CF₃)₂.

22. Verbundelektrode nach Anspruch 20, **dadurch gekennzeichnet, dass** das Salz des Verbundmaterials ein Salz eines Kations ist, aus das den Kationen R₃O⁺ (Oxonium), NR₄⁺ (Ammonium), RC(NHR₂)₂⁺ (Amidinium), C(NHR₂)₃⁺ (Guanidinium), C₅R₆N⁺ (Pyridinium), C₃R₅N₂⁺ (Imidazolium), C₃RN₂⁺ (Imidazolinium), C₂R₄N₃⁺ (Triazolium), SR₃⁺ (Sulfonium), PR₄⁺ (Phosphonium), IR₂⁺ (Jodonium), (C₆R5)₃C⁺ (Carbonium) ausgewählt ist, wobei die Radikale R identisch oder unterschiedlich sein können, wobei die Radikale aus den Alkyl-, Alkenyl-, Oxaalkyl-, Oxaalkenyl-, Azaalkyl-, Azaalkenyl-, Thiaalkyl-, Thiaalkenyl-, Silaalkyl-, Silaalkenyl-, Aryl-, Arylalkyl-, Alkylaryl-, Alkenylaryl-, Dialkylamin- und Dialkylazoradikalen ausgewählt sind.

23. Verbundelektrode nach Anspruch 22, **dadurch gekennzeichnet, dass** die Radikale R vorzugsweise höchstens 5 Kohlenstoffatome haben.

24. Batterie, gebildet von einer positiven Elektrode und einer negativen Elektrode, getrennt durch ein Elektrolyt, das ein Lithiumsalz umfasst, **dadurch gekennzeichnet, dass** mindestens eine ihrer Elektroden eine Elektrode nach einem der Ansprüche 19 oder 21 ist.

25. Superkondensator, gebildet von zwei durch ein Elektrolyt getrennte Elektroden, **dadurch gekennzeichnet, dass** mindestens eine der Elektroden eine Elektrode nach einem der Ansprüche 19 oder 22 ist.

## Claims

1. Method for preparing a composite electrode material, comprising:
- a 1^{st} step to prepare a viscous solution containing at least one polymer P1 having a weight composition in heteroatoms O, N, P or S of 15 % or higher, at least one polymer P2 having a weight composition in heteroatoms O, N, P, or S of 5% or lower, a material imparting electronic conductivity C1, an active electrode material M1 and at least one non-volatile solvent S1;
- a 2^{nd} step to prepare a film from the viscous solution obtained,
**characterized in that**, at the 1^{st} step, the polymers are added in the pure state or in the form of a solution in a volatile solvent; C1 is added in the pure state or in the form of a suspension or solution in a volatile solvent; M1 is added in the pure state or in the form of a suspension in a volatile solvent; and **in that**:
- P1 is selected from among polyethers, polyesters, polyacrylic polymers, polycarbonates, polyimines, polyamides, polyacrylamides, polyurethanes, polyepoxides and polyphosphazenes, polysulfones;
- P2 is selected from among homopolymers and copolymers of vinyl chloride, vinylidene fluoride, vinylidene chloride, ethylene tetrafluoride, chlorotrifluoroethylene, copolymers of vinylidene fluoride and hexafluoropropylene; polyolefins and elastomers;
- the non-volatile liquid organic solvent S1 is formed of one or more compounds selected from among linear and cyclic carbonates;
- C1 is formed of graphite, carbon fibres, carbon nanowires, carbon nanotubes or electronically conducting polymers.

2. The method according to claim 1, **characterized in that** it comprises the adding of a salt to the material.

3. The method according to claim 2, **characterized in that** the salt is added to the material by adding said salt alone or in solution in a volatile solvent when preparing the viscous solution.

4. The method according to claim 2, **characterized in that** the salt is added by impregnating the film obtained from the viscous solution, with a solution of said salt in a volatile solvent.

5. The method according to claim 1, **characterized in that** it further comprises a densification step whereby the film is subjected to hot pressure.

6. The method according to claim 1, **characterized in that** the polymer P1 is a polyether selected from among homopolymers and copolymers of ethylene oxide, methylene oxide, propylene oxide, epichlorohydrin or allyl glycidyl ether, or a polyester selected from among homopolymers and copolymers of ethylene terephthalate, butylene terephthalate or vinyl acetate.

7. The method according to claim 1, **characterized in that** the polymer P1 is a polyacrylic polymer selected from among homopolymers and copolymers of acrylamide, methyl acrylate, ethyl acrylate, propyl acrylate, butyl acrylate, ethyl-hexyl acrylate, stearyl acrylate, ethylene glycol diacrylate, triethylene glycol dimethacrylate, methyl methacrylate or acrylic acid.

8. The method according to claim 1, **characterized in that** the polymer P1 is selected from among homopolymers and copolymers of acrylonitrile, homopolymers and copolymers of vinyl acetate and vinyl alcohol, homopolymers and copolymers of bisphenol A carbonate, poly(ethylene imine)s, homopolymers and copolymers of vinyl pyrrolidone or vinyl sulfone.

9. The method according to one of the preceding claims, **characterized in that** the volatile solvent is selected from among acrylonitrile, acetonitrile, cyclohexanone and THF.

10. The method according to claim 1, **characterized in that** the preparation of the viscous solution is performed in a single phase,

11. The method according to claim 1, **characterized in that** the preparation of the viscous solution comprises two successive phases, the first phase consisting of preparing a viscous solution containing all the constituents except S1, of forming a film from this solution, and drying the film to obtain a powder, the second phase consisting of forming a new viscous solution by adding S1 to this powder, this new solution being used to prepare the final film.

12. The method according to claim 1, **characterized in that** the preparing of the viscous solution comprises two successive phases, the first phase consisting of preparing a viscous solution containing all the constituents except P2, of forming a film from this solution, and drying the film to obtain a powder, the second phase consisting of forming a new viscous solution by adding to said powder a solution of P2 in a volatile solvent, this new solution being used to prepare the final film.

13. The method according to claim 1, **characterized in that** at the 2^{nd} step the film is obtained from the viscous solution prepared at the 1^{st} step, by extrusion or application to a substrate followed by drying.

14. The method according to claim 13, **characterized in that** the substrate used for application is a metal foil or grid able to act as collector for the electrode.

15. The method according to claim 1, **characterized in that** the active electrode material M1 is selected from among Li₁₊ₓV₃O₈, 0<x<4, LiₓV₂O₅, nH₂O, (0<x<3, 0<n<2), Li FePO₄, hydrated or non-hydrated iron phosphates and sulfates, hydrated or non-hydrated vanadyl phosphates and sulfates, LiMn₂O₄, compounds derived from LiMn₂O₄ obtained by substitution of Mn by Al, Ni or Co, LiMnO₂, LiNiO₂, compounds derived from LiMn_{O2} obtained by substitution of Mn by Al, Ni or Co, LiCoO₂, the compounds derived from LiCoO₂ obtained by substitution of Co by Al, Ti, Mg, Ni and Mn.

16. The method according to claim 1, **characterized in that** the active electrode material M1 is selected from among.
- carbon compound;
- alloys with lithium of LiₓM type (M=Sn, Sb, Si) obtained from SnO, from SnO₂, from compounds of Sn, Sn-Fe(-C), from compounds of Si, from compounds of Sb; or
- LiₓCu₆Sn₅ compounds (0<x<13), iron borates, pnictides (selected from among Li_{3-x-y}Co_{y}N, Li_{3-x-y}Fe_{y}N, LiₓMnP₄, LiₓFeP₂, LiₓFeSb₂), simple oxides with reversible decomposition and insertion oxides such as the titanates MoO₃ or WO₃.

17. The material obtained with a method according to claim 1, formed of at least one polymer P1 having a weight composition in heteroatoms O, N, P or S of 15 % or higher, at least one polymer P2 having a weight composition in heteroatoms O, N, P or S of 5% or lower, a material imparting electronic conductivity C1, an active electrode material M1 and at least one non-volatile solvent S1, **characterized in that** on submicron scale and on micron scale:
- the polymer P1 and the material C1 imparting electronic conductivity form a dense, homogeneous and continuous phase around the grains of active material;
- the polymer P2 is in the form of a dispersed phase not containing or scarcely containing the material C1, and having morphology of spherical, cylindrical, needle or ribbon type creating porosity.

18. The material according to claim 17, **characterized in that** it contains a salt.

19. Composite electrode, **characterized in that** it is formed of a film of composite material according to claim 17, deposited on a collector.

20. Composite electrode, **characterized in that** it is formed of a film of composite material according to claim 18, deposited on a collector.

21. The composite electrode according to claim 20, **characterized in that** the salt of the composite material is a lithium salt selected from among LiPF₆, LiAsF₆, LiC₄BO₈, LiClO₄, LiBF₄, Li(C₂F₅SO₂)₂N, LiCF₃SO₃, LiCH₃SO₃, Li[(C₂F₅)₃PF₃] and LiN(SO₂CF₃)₂.

22. The composite electrode according to claim 20, **characterized in that** the salt of the composite material is a salt of a cation selected from among the cations R₃O⁺ (oxonium), NR₄⁺ (ammonium), RC(NHR₂)₂⁺ (amidinium), C(NHR₂)₃⁺ (guanidinium), C₅R₆N⁺ (pyridinium), C₃R₅N₂⁺(imidazolium), C₃R₇N₂⁺ (imidazolinium), C₂R₄N₃⁺ (triazolium), SR₃⁺ (sulfonium), PR₄⁺ (phosphonium), IR₂⁺ (iodonium), (C₆R₅)₃C⁺ (carbonium), wherein the radicals R can be the same or different, said radicals being selected from among alkyl, alkenyl, oxaalkyl, oxaalkenyl, azaalkyl, azaalkenyl, thiaalkyl, thiaalkenyl, silaalkyl, silaalkenyl, aryl, arylalkyl, alkylaryl, alkenylaryl, dialkylamino and dialkylazo radicals.

23. The composite electrode according to claim 22, **characterized in that** the radicals R preferably have no more than 5 carbon atoms.

24. Battery formed of a positive electrode and negative electrode separated by an electrolyte which comprises a lithium salt, **characterized in that** at least one of the electrodes thereof is an electrode according to one of claims 19 or 21.

25. Supercapacitor formed of two electrodes separated by an electrolyte, **characterized in that** at least one of the electrodes is an electrode according to one of claims 19 or 22.
